# EUROPEAN PATENT SPECIFICATION

(11) **EP 2 177 378 B1**
(45) Date of publication and mention of the grant of the patent: **07.05.2014**
(21) Application number: 08752372.6
(22) Date of filing: 07.05.2008
(51) Int. Cl.: B60C 19/00

(54) **PNEUMATIC TIRE**
LUFTREIFEN
PNEU

(30) Priority: 08.08.2007 JP 2007206931
(43) Date of publication of application: 21.04.2010
(73) Proprietor: The Yokohama Rubber Co., Ltd., Minato-ku Tokyo 105-8685 (JP)
(72) Inventor: DAISHO, Yasujiro c/o The Yokohama Rubber Co. Ltd., Hiratsuka-shi Kanagawa 254-8601 (JP)
(74) Representative: HOFFMANN EITLE
(86) International application number: PCT/JP2008/058480
(87) International publication number: WO 2009/019915

(56) References cited:
- WO-A1-2004/052663
- WO-A1-2004/052663
- JP-A- 1 145 210
- JP-A- 2 185 802
- JP-A- 01 145 210
- JP-A- 02 185 802
- JP-A- 06 328 917
- JP-A- 11 286 203
- JP-A- 2002 127 712
- JP-A- 2002 127 712
- JP-A- 2003 326 916
- JP-A- 2004 306 769
- JP-A- 2007 515 323
- US-A1- 2002 033 212
- US-B1- 6 223 797

## Description

### TECHNICAL FIELD

The present invention relates to a pneumatic tire. Embodiments thereof have a carcass layer having a single-ply structure and wound-up sections each extended up to a region below a belt layer so as to overlap with an end section of the belt layer. Embodiments more specifically relate to a pneumatic tire in which the performance change of driving stability due to continuous driving can be suppressed.

### BACKGROUND ART

In recent years, requirements for weight reduction have been becoming stricter for pneumatic tires mounted to vehicles such as sports cars which are made to be driven at high speeds. In addition to satisfying such requirements for weight reduction, ensuring driving stability equivalent to or greater than those of conventional pneumatic tires is required.

In this regard, a pneumatic tire has been proposed in which a single-ply structured carcass layer is laid between a pair of bead sections. A belt layer is arranged on the outer peripheral side of the carcass layer in a tread section of the tire. The carcass layer is wound up, from the inner side to the outer side of the tire, around each of bead cores arranged respectively in the bead sections. Bead fillers arranged respectively on the bead cores are each sandwiched by a body section and a wound-up section of the carcass layer, and each wound-up section of the carcass layer extended up to a region below the belt layer so as to overlap with an end section of the belt layer (for example, see Japanese patent application Kokai publication No. 5-238208, Japanese patent application Kokai publication No. 6-16009, and Japanese patent application Kokai publication No. 2000-52709).

The pneumatic tire having the carcass layer having the single-ply structure and the wound-up sections each extended up to the region below the belt layer so as to overlap with the end section of the belt layer, can exhibit excellent driving stability by causing the body section and each wound-up section of the carcass layer to overlap with each other in each side wall section, while obtaining an effect of weight reduction by providing a single ply for the carcass layer.

However, the pneumatic tire having the structure described above has a problem that the driving stability decreases along with the tire being heated when a continuous driving in a circuit is performed, for example. Therefore, there is a demand for suppressing the performance change of driving stability due to continuous driving in the pneumatic tire in which weight reduction and driving stability are both achieved based on the structure described above.

JP 2002-127712 relates to a pneumatic tire. It comprises a single-ply carcass which is laid between a pair of bead parts, a belt layer arranged on an outer peripheral side of the carcass in a tread part, bead parts around each of which the carcass is wound up from an inner side to an outer side of its tire, a bead apex rubber is arranged respectively on the bead parts and each is sandwiched by a body part and the folded section of the carcass, and each folded section of the carcass is extended up to a region below the belt layer so as to overlap with an end section of the belt layer. JP 1-145210 A and US 6,223,797 B1 are further prior art documents.

### SUMMARY OF THE INVENTION

A pneumatic tire according to the present invention is a pneumatic tire in which a single-ply structured carcass layer having a cord angle in a range of 75° to 90° to a tire circumferential direction is laid between a pair of bead sections, a belt layer is arranged on an outer peripheral side of the carcass layer in a tread section, bead cores around each of which the carcass layer is wound up from an inner side to an outer side of a tire are arranged respectively in the bead sections, bead fillers are arranged respectively on the bead cores and are each sandwiched by a body section and a wound-up section of the carcass layer, and each wound-up section of the carcass layer is extended up to a region below the belt layer so as to overlap with an end section of the belt layer, wherein a height of the bead filler from a bead heel is not more than 25 mm, a sectional area of the bead filler is not more than 65 mm², and tanδ at 60°C of a rubber composition constituting the bead filler is not more than 0.20, wherein an organic fiber reinforcement layer including organic fiber cords each tilted to the tire circumferential direction is buried in the bead section to enwrap the bead core and the bead filler and wherein an end section of the organic fiber reinforcement layer on an inner surface side of the tire is arranged on an outer side in a radial direction of the tire with respect to a peak of the bead filler, and an end section of the organic fiber reinforcement layer on an outer surface side of the tire is arranged on the outer side in the radial direction of the tire with respect to the end section on the inner surface side of the tire.

### BRIEF DESCRIPTION OF THE DRAWINGS

In the following, reference will now be made to the accompanying drawings, which illustrate, by way of example only, ways in which the invention may be carried out, in which:
Fig. 1 is a meridian sectional view showing a pneumatic tire of an embodiment of the present invention; and
Fig. 2 is a plan view showing a tread pattern of the pneumatic tire of the embodiment of the present invention.

### DETAILED DESCRIPTION

An advantage achieved by embodiments of the present invention is to provide a pneumatic tire in which the performance change of driving stability due to continuous driving can be suppressed even with a carcass layer having a single-ply structure and wound-up sections each extended up to a region below a belt layer so as to overlap with an end section of the belt layer.

In embodiments of the present invention, the carcass layer, which has the single-ply structure and the wound-up section extended up to the region below the belt layer so as to overlap with the end section of the belt layer, is provided in order to achieve both weight reduction and driving stability. By further lowering the bead filler, which repeatedly deforms at the time of the rolling motion of the tire, to reduce the sectional area thereof and reducing the tanδ at 60°C of the rubber composition constituting the bead filler, the heat of the tire due to continuous driving in a circuit is suppressed to suppress the performance change of the driving stability. Accordingly, the initial driving stability can be maintained for a long period of time in the continuous driving.

In embodiments of the present invention, in the case of the pneumatic tire having a mounting direction specified with respect to a front and back of the tire at a time of mounting the tire to a vehicle, it is preferable that at least two types of cap tread rubber layers having different rubber compositions are arranged in the tread section to be adjacent to each other in a tire width direction, and tanδ at 60°C of the rubber composition constituting the cap tread rubber layer on an outer side of the vehicle be larger than tanδ at 60°C of the rubber composition constituting the cap tread rubber layer on an inner side of the vehicle

Generally speaking, increasing the tanδ at 60°C of the rubber composition constituting the cap tread rubber layer improves the driving stability, but causes the performance change of the driving stability due to heat to easily occur. On the other hand, by relatively increasing the tanδ on the outer side of the vehicle and relatively decreasing the tanδ on the inner side of the vehicle as described above, it becomes possible to suppress the performance change of the driving stability due to continuous driving while improving the driving stability.

It is preferable that the ratio (tanδ H/tanδ L) of a maximum value tanδ H to a minimum value tanδ L of the tanδ at 60°C of the rubber compositions constituting the at least two types of cap tread rubber layers be in a range of 1.05 to 1.80. Accordingly, the effect of suppressing the performance change of driving stability due to continuous driving while improving the driving stability can be obtained sufficiently.

It is preferable that boundary of the at least two types of cap tread rubber layers be arranged below a main groove extending in the tire circumferential direction in the tread section. Accordingly, the occurrence of uneven wear due to the difference of the rubber compositions can be suppressed.

In the case of the pneumatic tire having the mounting direction specified with respect to the front and back of the tire at the time of mounting the tire to the vehicle, it is preferable that at least one main groove extending in the tire circumferential direction be provided in the tread section, and an asymmetric tread pattern be formed in which a groove area ratio GAo in a ground contact region on the outer side of the vehicle with respect to the tread center is smaller than a groove area ratio GAi in a ground contact region on the inner side of the vehicle with respect to the tread center.

In the asymmetric tread pattern, it is preferable that a groove area ratio GA in an entire ground contact region be in a range of 20% to 40%, and a difference (GAi - GAo) between the groove area ratio GAo in the ground contact region on the outer side of the vehicle and the groove area ratio GAi in the ground contact region on the inner side of the vehicle be in a range of 1% to 15%. Accordingly, the effect of suppressing the performance change of driving stability due to continuous driving while improving the driving stability can be obtained sufficiently.

In embodiments of the present invention, the height of the bead filler from the bead heel is a height measured under measurement conditions of the tire dimension defined by a specification with which the tire complies, and is a dimension from the bead heel corresponding to the reference position of the rim diameter to the peak of the bead filler in the radial direction of the tire. The tanδ at 60°C is measured using a viscoelastic spectrometer (manufactured by Toyo Seiki Seisaku-sho, Ltd.) under conditions of a 60°C temperature, a 20 Hz frequency, a 10% initial strain, and a +- 2% dynamic strain. The groove area ratio is a ratio (%) of a groove area in a ground contact region with respect to the whole area of the ground contact region measured under measurement conditions of a static loaded radius of the tire defined by the specification with which the tire complies.

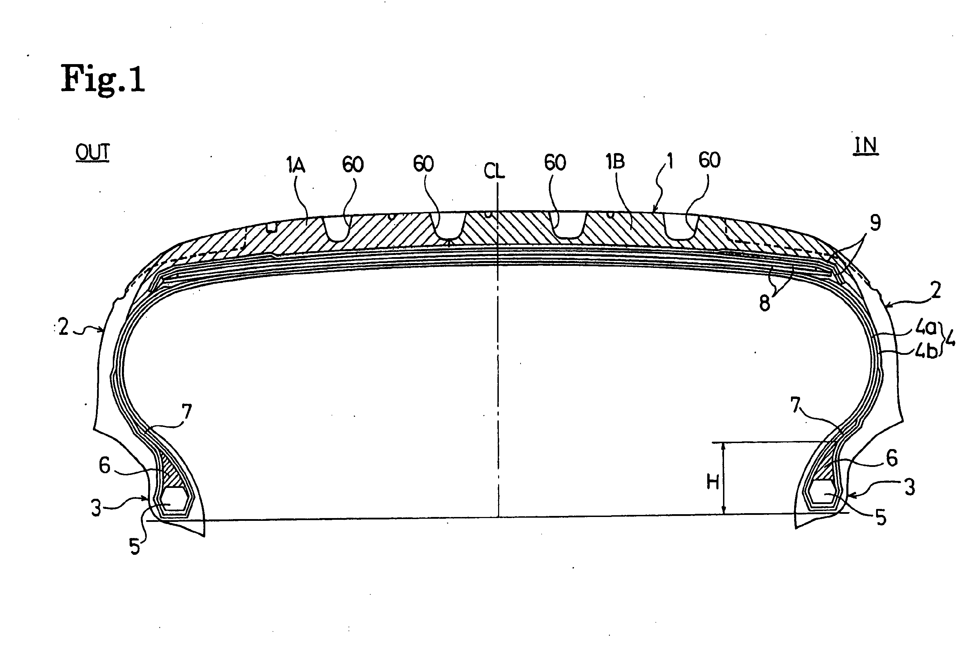

Hereinafter, the configuration of embodiments of the present invention will be described in detail with reference to the accompanying drawings. Fig. 1 shows a pneumatic tire of an embodiment of the present invention. In Fig. 1, reference numeral 1 denotes a tread section, reference numeral 2 denotes side wall sections, and reference numeral 3 denotes bead sections. As shown in Fig. 1, a single carcass layer 4, which is formed of bundled carcass cords arranged in parallel, is laid between a pair of the bead sections 3, 3. It is preferable to use organic fiber cords formed of rayon, polyester, nylon, aromatic polyamide, or the like as the carcass cord. The cord angle of the carcass layer 4 to the tire circumferential direction is set in a range of 75° to 90°, and preferably in a range of 80° to 87°. The cord angle of the carcass layer 4 to the tire circumferential direction is, for example, a high angle when the load factor is low and a low angle when the load factor is high, whereby the required performance such as driving stability can be maintained without affecting the mass of the tire. The carcass layer 4 is wound up around a bead core 5 from the inner side to the outer side of the tire. That is, the carcass layer 4 is constituted of a body section 4a and a wound-up section 4b with the bead core 5 sandwiched in between.

In the bead section 3, a bead filler 6 formed of a high-hardness rubber composition is arranged on the outer periphery of the bead core 5, and the bead filler 6 is sandwiched by the body section 4a and the wound-up section 4b of the carcass layer 4. In the bead section 3, an organic fiber reinforcement layer 7 which includes organic fiber cords each tilted to the tire circumferential direction is buried to enwrap the bead core 5 and the bead filler 6. An end section of the organic fiber reinforcement layer 7 on the inner surface side of the tire is arranged on the outer side in the radial direction of the tire with respect to the peak of the bead filler 6, and an end section of the organic fiber reinforcement layer 7 on the outer surface side of the tire is arranged on the outer side in the radial direction of the tire with respect to the end section of the organic fiber reinforcement layer 7 on the inner surface side of the tire.

Meanwhile, a belt layer 8 formed of layers including a reinforcement cord tilted to the tire circumferential direction is arranged on the outer peripheral side of the carcass layer 4 in the tread section 1. Further, a belt cover layer 9 including a reinforcement cord aligned in the tire circumferential direction is arranged on the outer periphery side of the belt layer 8. The wound-up section 4b of the carcass layer 4 described above extends up to a region below the belt layer 8 to overlap with an end section of the belt layer 8 in the tire width direction.

In the pneumatic tire described above, the carcass layer 4, which has a single-ply structure and the wound-up section 4b extended up to the region below the belt layer 8 to overlap with the end section of the belt layer 8, is provided in order to achieve both weight reduction and driving stability. On the basis of such structure, a height H of the bead filler 6 from a bead heel is not more than 25 mm, the sectional area of the bead filler 6 in a meridian section of the tire is not more than 65 mm², and tanδ at 60°C of the rubber composition constituting the bead filler 6 is not more than 0.20.

In the pneumatic tire, deformation of the bead filler 6 is repeated at the time of rolling motion, whereby the performance change of the driving stability becomes apparent when the heating value due to the bead filler 6 correspondingly increases. Thus, by lowering the bead filler 6 to reduce the sectional area thereof and reducing the tanδ at 60°C of the rubber composition constituting the bead filler 6, it is possible to suppress heat of the tire due to continuous driving at a circuit and suppress the performance change of the driving stability. As a result, the initial driving stability can be maintained over a long period of time in the continuous driving.

When the height H of the bead filler 6 exceeds 25 mm, the effect of suppressing the performance change of the driving stability becomes insufficient. The lower limit value of the height H of the bead filler 6 is preferably 10 mm.

In the same manner, when the sectional area of the bead filler 6 exceeds 65 mm², the effect of suppressing the performance change of the driving stability becomes insufficient. The lower limit value of the sectional area of the bead filler 6 is preferably 15 mm².

When the tanδ at 60°C of the rubber composition constituting the bead filler 6 exceeds 0.20, the effect of suppressing the performance change of the driving stability becomes insufficient. The lower limit value of the tanδ at 60°C of the rubber composition constituting the bead filler 6 is preferably 0.03.

The pneumatic tire described above is a tire whose mounting direction is specified with respect to the front and back of the tire at the time of mounting the tire to a vehicle. In Fig. 1, IN indicates an inner side of the vehicle at the time of mounting the tire to the vehicle, and OUT indicates an outer side of the vehicle of at the time of mounting the tire to the vehicle.

As shown in Fig. 1, in the tire whose mounting direction is specified with respect to the front and back of the tire in this manner, two types of cap tread rubber layers 1A and 1B having different rubber compositions are arranged in the tread section 1 so as to be adjacent to each other in the tire width direction. The tanδ at 60°C of the rubber composition constituting the cap tread rubber layer-1A on the outer side of the vehicle is larger than the tanδ at 60°C of the rubber composition constituting the cap tread rubber layer 1B on the inner side of the vehicle. By providing a difference in tanδ for the rubber compositions of the cap tread rubber layers 1A and 1B, it becomes possible to improve the driving stability, suppress heat in the tread section 1, and suppress the performance change of the driving stability.

The ratio (tanδ H/tanδ L) of a tanδ H at 60°C of the rubber composition constituting the cap tread rubber layer 1A to a tanδ L at 60°C of the rubber composition constituting the cap tread rubber layer 1B is set in a range of 1.05 to 1.80, and preferably in a range of 1.10 to 1.50. When the ratio (tanδ H/tanδ L) is too small, the effect of suppressing the performance change of the driving stability decreases. On the other hand, when it is too large, the grip force normally required cannot be obtained. Note that it is preferable to arrange the boundary of the cap tread rubber layers 1A and 1B below a main groove 60 extending in the tire circumferential direction in the tread section 1. Accordingly, the occurrence of uneven wear due to the difference of the rubber compositions can be suppressed.

In this embodiment, two types of the cap tread rubber layers 1A and 1B having different rubber compositions are arranged in the tread section 1. However, two or more types of the cap tread rubber layers may be arranged so as to be adjacent to each other in the tire width direction.

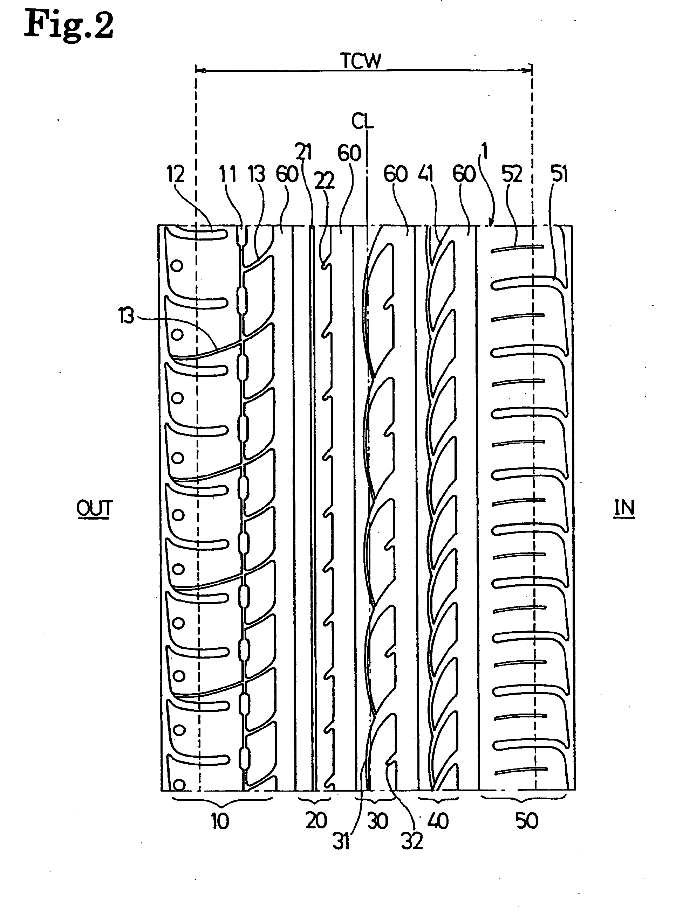

Fig. 2 shows a tread pattern of the pneumatic tire of the embodiment of the present invention. In Fig. 2, CL indicates a tread center. As shown in Fig. 2, in the tread section 1, the main grooves 60 extending in the tire circumferential direction are formed, and land sections 10, 20, 30, 40, and 50 are segmented by the main grooves 60 from the outer side of the vehicle to the inner side of the vehicle. The land section 10 located on the outermost side of the vehicle is formed of a thin groove 11 extending in the tire circumferential direction, lateral grooves 12 extending in the tire width direction on the tread shoulder side with respect to the thin groove 11, and thin grooves 13 extending in the tire width direction at least on the tread center side with respect to the thin groove 11. The land section 20 is formed with a thin groove 21 extending in the tire circumferential direction and cutout grooves 22 extending in the tire width direction. In the land section 30 formed are curved grooves 31 curved and extending in the tire circumferential direction, and cutout grooves 32 extending in the tire width direction. In the land section 40 formed is curved grooves 41 curved and extending in the tire circumferential direction. In the land section 50 located on the inner most side of the vehicle, formed are lateral grooves 51 extending in the tire width direction and thin grooves 52 extending in the tire width direction between the lateral grooves 51.

In the pneumatic tire described above, at least one main groove 60 extending in the tire circumferential direction is formed in the tread section 1, and has an asymmetric tread pattern, in which a groove area ratio GAo in a ground contact region on the outer side of the vehicle with respect to the tread center CL is smaller than a groove area ratio GAi in a ground contact region on the inner side of the vehicle with respect to the tread center CL, over the entire ground contact region specified by a ground contact width TCW. Accordingly, the effect of suppressing the performance change of the driving stability due to continuous driving while improving the driving stability can be sufficiently obtained.

The groove area ratio GA in the entire ground contact region is in a range of 20% to 40%, and the difference (GAi - GAo) between the groove area ratio GAo in the ground contact region on the outer side of the vehicle with respect to the tread center CL and the groove area ratio GAi in the ground contact region on the inner side of the vehicle with respect to the tread center CL is in a range of 1% to 15%, and more preferably in a range of 2% to 13%. When the difference (GAi - GAo) is too small, the effect of suppressing the performance change of the driving stability decreases. When it is too large, the driving stability decreases due to insufficiency in block rigidity normally required.

The preferred embodiment of the present invention has been described above in detail. However, it should be understood that various modifications, alterations, and substitutions may be made without departing from the scope of the present invention defined by the accompanying claims.

### EXAMPLES

Pneumatic tires of Comparative Examples 1 to 3 and Examples 1 to 5 were prepared in the following manner. Each of these pneumatic tires had a tire size of 235/40R18, and a single-ply structured carcass layer having a cord angle of 85° to the tire circumferential direction was laid between a pair of bead sections. A belt layer was arranged on the outer peripheral side of the carcass layer in a tread section of the tire. The carcass layer was wound up, from the inner side to the outer side of the tire, around each of bead cores arranged respectively in the bead sections. Bead fillers arranged respectively on the bead cores were each sandwiched by a body section and a wound-up section of the carcass layer, and each wound-up section of the carcass layer extended up to a region below the belt layer so as to overlap with an end section of the belt layer. Moreover, for each of these pneumatic tires of Comparative Examples 1 to 3 and Examples 1 to 5, the height of each bead filler from bead heels, the sectional area of each bead filler, tanδ at 60°C of the rubber composition constituting the bead fillers, tanδ at 60°C of the rubber composition constituting a cap tread rubber layer on the outer side of a vehicle and the inner side of the vehicle, and groove area ratios on the outer side of the vehicle and the inner side of the vehicle were set as shown in Table 1.

The performance changes of the driving stability of these test tires were evaluated by use of the following test method, and the results are also shown in Table 1.

### Performance Change of Driving Stability:

Each test tire was fitted onto a wheel having a rim size of 18 x 8J, and the wheel with the test tire was mounted on a vehicle having a displacement of approximately 4000 cc, whereby a continuous driving for the distance of 200 km was performed by a test driver under a condition of a 250 kPa pneumatic pressure to perform a sensory evaluation of the change between the driving stability at the beginning of driving and the driving stability at the end of driving. The evaluation result is shown by use of an index with 100 as an acceptable level. A larger index value indicates a smaller performance change.

**[Table 1]**

| | | Comparative Example 1 | Comparative Example 2 | Comparative Example 3 | Example 1 | Example 2 | Example 3 | Example 4 | Example 5 |
|---|---|---|---|---|---|---|---|---|---|
| Cord angle of carcass layer (°) | | 85 | 85 | 85 | 85 | 85 | 85 | 85 | 85 |
| Height of bead filler (mm) | | 20 | 26 | 26 | 20 | 15 | 20 | 20 | 20 |
| Sectional area of bead filler (mm²) | | 60 | 68 | 68 | 60 | 30 | 60 | 60 | 60 |
| Tanδ of bead filler at 60°C | | 0.22 | 0.17 | 0.22 | 0.17 | 0.17 | 0.17 | 0.17 | 0.17 |
| Tanδ of cap tread rubber layer at 60°C | Outer side of vehicle | 0.34 | 0.34 | 0.34 | 0.34 | 0.34 | 0.34 | 0.34 | 0.34 |
| | Inner side of vehicle | 0.34 | 0.34 | 0.34 | 0.34 | 0.34 | 0.28 | 0.34 | 0.28 |
| Groove area ratio (%) | Outer side of vehicle | 35 | 35 | 35 | 35 | 35 | 35 | 32 | 32 |
| | Inner side of vehicle | 35 | 35 | 35 | 35 | 35 | 35 | 38 | 38 |
| Performance change of driving stability (index) | | 90 | 90 | 85 | 103 | 105 | 105 | 104 | 106 |

As shown in Table 1, the tires of Examples 1 to 5 all showed small performance change of the driving stability due to the continuous driving. On the other hand, the performance changes of the driving stability were evaluated to be below the acceptable level in Comparative Examples 1 to 3.

## Claims

1. A pneumatic tire in which a single-ply structured carcass layer (4) having a cord angle in a range of 75° to 90° to a tire circumferential direction is laid between a pair of bead sections (3), a belt layer (8) is arranged on an outer peripheral side of the carcass layer (4) in a tread section (1), bead cores (5) around each of which the carcass layer (4) is wound up from an inner side to an outer side of a tire are arranged respectively in the bead sections (3), bead fillers (6) are arranged respectively on the bead cores (5) and are each sandwiched by a body section (4a) and a wound-up section (4b) of the carcass layer (4), and each wound-up section of the carcass layer (4) is extended up to a region below the belt layer (8) so as to overlap with an end section of the belt layer (8), wherein a height (H) of the bead filler (6) from a bead heel is not more than 25 mm, a sectional area of the bead filler (6) is not more than 65 mm², and tanδ at 60°C of a rubber composition constituting the bead filler (6) is not more than 0.20,
wherein an organic fiber reinforcement layer (7) including organic fiber cords each tilted to the tire circumferential direction is buried in the bead section (3) to enwrap the bead core (5) and the bead filler (6) and wherein an end section of the organic fiber reinforcement layer (7) on an inner surface side of the tire is arranged on an outer side in a radial direction of the tire with respect to a peak of the bead filler (6), and an end section of the organic fiber reinforcement layer (7) on an outer surface side of the tire is arranged on the outer side in the radial direction of the tire with respect to the end section on the inner surface side of the tire.

2. The pneumatic tire according to claim 1 having a mounting direction specified with respect to a front and back of the tire at a time of mounting the tire to a vehicle, wherein at least two types of cap tread rubber layers (1A, 1B) having different rubber compositions are arranged in the tread section (1) to be adjacent to each other in a tire width direction, and tanδ at 60°C of the rubber composition constituting the cap tread rubber layer on an outer side (1A) of the vehicle is larger than tanδ at 60°C of the rubber composition constituting the cap tread rubber layer on an inner side (1B) of the vehicle.

3. The pneumatic tire according to claim 2, wherein a ratio (tanδ H/tanδ L) of a maximum value tanδ H to a minimum value tanδ L of the tanδ at 60°C of the rubber compositions constituting the at least two types of cap tread rubber layers (1A, 1B) is in a range of 1.05 to 1.80.

4. The pneumatic tire according to any one of claim 2 and claim 3, wherein a boundary of the at least two types of cap tread rubber layers (1A, 1B) is arranged below a main groove (60) extending in the tire circumferential direction in the tread section.

5. The pneumatic tire according to any one of claims 1 to 4 having the mounting direction specified with respect to the front and back of the tire at the time of mounting the tire to the vehicle, wherein at least one main groove (60) extending in the tire circumferential direction is provided in the tread section (1), and an asymmetric tread pattern is formed in which a groove area ratio GAo in a ground contact region on the outer side of the vehicle with respect to a tread center (CL) is smaller than a groove area ratio GAi in a ground contact region on the inner side of the vehicle with respect to the tread center (CL).

6. The pneumatic tire according to claim 5, wherein a groove area ratio GA in an entire ground contact region is in a range of 20% to 40%, and a difference (GAi - GAo) between the groove area ratio GAo in the ground contact region on the outer side of the vehicle and the groove area ratio GAi in the ground contact region on the inner side of the vehicle is in a range of 1% to 15%.

## Patentansprüche

1. Pneumatischer Reifen, bei dem eine einlagig strukturierte Karkassenschicht (4) mit einem Kordwinkel in einem Bereich von 75 Grad bis 90 Grad zu einer Reifenumfangsrichtung zwischen ein Paar an Wulstabschnitten (3) gelegt ist, eine Gürtelschicht (8) auf einer Außenumfangsseite der Karkassenschicht (4) in einem Laufflächenabschnitt (1) angeordnet ist, Wulstkerne (5), um die jeweils die Karkassenschicht (4) von einer inneren Seite zu einer äußeren Seite eines Reifens aufgewickelt ist, jeweils in den Wulstabschnitten (3) angeordnet sind, Wulstfüller (6) jeweils auf den Wulstkernen (5) angeordnet sind und jeweils zwischen einem Körperabschnitt (4a) und einem aufgewickelten Abschnitt (4b) der Karkassenschicht (4) angeordnet sind, und wobei sich jeder aufgewickelte Abschnitt der Karkassenschicht (4) bis zu einem Bereich unterhalb der Gürtelschicht (8) erstreckt, um so mit einem Endabschnitt der Gürtelschicht (8) zu überlappen, wobei eine Höhe (H) des Wulstfüllers (6) von einer Wulstferse her nicht mehr als 25 mm beträgt, ein Querschnittsbereich des Wulstfüllers (6) nicht mehr als 65 mm² beträgt, und tanδ bei 60°C einer Gummizusammensetzung, die den Wulstfüller (6) bildet, nicht mehr als 0.20 beträgt,
wobei eine organische Faserverstärkungsschicht (7) mit organischen Faserkorden, die jeweils zu der Reifenumfangsrichtung hin geneigt sind, in den Wulstabschnitt (3) eingelassen ist, um den Wulstkern (5) und den Wulstfüller (6) zu umhüllen, und wobei ein Endabschnitt der organischen Faserverstärkungsschicht (7) auf einer Innenflächenseite des Reifens auf einer äußeren Seite in einer Radialrichtung des Reifens in Bezug auf einen Peak des Wulstfüllers (6) angeordnet ist, und ein Endabschnitt der organischen Faserverstärkungsschicht (7) auf einer Außenflächenseite des Reifens auf der äußeren Seite in der Radialrichtung des Reifens in Bezug auf den Endabschnitt auf der Innenflächenseite des Reifens angeordnet ist.

2. Pneumatischer Reifen nach Anspruch 1, bei dem eine Montagerichtung in Bezug auf eine Vorderseite und Rückseite des Reifens zu einem Zeitpunkt der Montage des Reifens an einem Fahrzeug spezifiziert ist, wobei mindestens zwei Typen an Kappenlaufflächengummischichten (1A, 1B) mit unterschiedlichen Gummizusammensetzungen in dem Laufflächenabschnitt (1) in einer Reifenbreitenrichtung benachbart zueinander angeordnet sind, und tanδ bei 60°C der Gummizusammensetzung, welche die Kappenlaufflächengummischicht auf einer äußeren Seite (1A) des Fahrzeugs bildet, größer ist als tanδ bei 60°C der Gummizusammensetzung, welche die Kappenlaufflächengummischicht auf einer inneren Seite (1B) des Fahrzeugs bildet.

3. Pneumatischer Reifen nach Anspruch 2, bei dem ein Verhältnis (tanδ H/ tanδ L) eines Maximalwerts tanδ H zu einem Minimalwert tanδ L von tanδ bei 60°C der Gummizusammensetzung, welche die mindestens zwei Typen an Kappenlaufflächengummischichten (1A, 1B) bildet, in einem Bereich von 1.05 bis 1.80 liegt.

4. Pneumatischer Reifen nach Anspruch 2 oder 3, bei dem eine Grenze der mindestens zwei Typen an Kappenlaufflächengummischichten (1A, 1B) unterhalb einer Hauptvertiefung (60) angeordnet ist, die sich in dem Laufflächenabschnitt in der Reifenumfangsrichtung erstreckt.

5. Pneumatischer Reifen nach einem der Ansprüche 1 bis 4, bei dem die Montagerichtung in Bezug auf die Vorderseite und die Rückseite des Reifens zu dem Zeitpunkt der Montage des Reifens an dem Fahrzeug spezifiziert ist, wobei mindestens eine Hauptvertiefung (60), die sich in der Reifenumfangsrichtung erstreckt, in dem Laufflächenabschnitt (1) vorgesehen ist, und ein asymmetrisches Laufflächenmuster ausgebildet ist, bei dem ein Vertiefungs-Flächen-Verhältnis GAo in einem Bodenkontaktbereich auf der äußeren Seite des Fahrzeugs in Bezug auf eine Laufflächenmitte (CL) kleiner ist als ein Vertiefungs-Flächen-Verhältnis GAi in einem Bodenkontaktbereich auf der inneren Seite des Fahrzeugs in Bezug auf die Laufflächenmitte (CL).

6. Pneumatischer Reifen nach Anspruch 5, bei dem ein Vertiefungs-Flächen-Verhältnis GA in einem gesamten Bodenkontaktbereich in einem Bereich von 20% bis 40% liegt, und eine Differenz (GAi - GAo) zwischen dem Vertiefungs-Flächen-Verhältnis GAo in dem Bodenkontaktbereich auf der äußeren Seite des Fahrzeugs und dem Vertiefungs-Flächen-Verhältnis GAi in dem Bodenkontaktbereich auf der inneren Seite des Fahrzeugs in einem Bereich von 1% bis 15% liegt.

## Revendications

1. Bandage pneumatique dans lequel une couche de carcasse structurée à pli unique (4), ayant un angle de câblé dans une plage allant de 75° à 90° par rapport à une direction circonférentielle du bandage, est disposée entre une paire de sections de talon (3), une couche de ceinture (8) est agencée sur un côté périphérique externe de la couche de carcasse (4) dans une section de bande de roulement (1), des tringles (5), autour de chacune desquelles la couche de carcasse (4) est enroulée à partir d'un côté interne jusqu'à un côté externe d'un bandage, sont agencées respectivement dans les sections de talon (3), des bourrages sur tringle (6) sont agencés respectivement sur les tringles (5) et chacun des bourrages sur tringle est pris en tenaille par une section de corps (4a) et une section enroulée (4b) de la couche de carcasse (4), et chaque section enroulée de la couche de carcasse (4) se prolonge jusqu'à une région en-dessous de la couche de ceinture (8) de manière à chevaucher une section d'extrémité de la couche de ceinture (8), où une hauteur (H) du bourrage sur tringle (6) à partir d'un bout du talon est inférieure ou égale à 25 mm, une surface transversale du bourrage sur tringle (6) est inférieure ou égale à 65 mm², et tanδ à 60°C d'une composition de caoutchouc constituant le bourrage sur tringle (6) est inférieure ou égale à 0,20,
dans lequel une couche de renforcement en fibres organiques (7), comportant des câblés en fibres organiques chacun étant incliné vers la direction circonférentielle du bandage, est noyée dans la section de talon (3) pour envelopper la tringle (5) et le bourrage sur tringle (6) et où une section d'extrémité de la couche de renforcement en fibres organiques (7) sur un côté de surface interne du bandage est agencée sur un côté externe dans une direction radiale du bandage par rapport à un sommet du bourrage sur tringle (6), et une section d'extrémité de la couche de renforcement en fibres organiques (7) sur un côté de surface externe du bandage est agencée sur le côté externe dans la direction radiale du bandage par rapport à la section d'extrémité sur le côté de surface interne du bandage.

2. Bandage pneumatique selon la revendication 1, ayant une direction de montage spécifiée par rapport à des parties avant et arrière du bandage au moment du montage du bandage sur un véhicule, où au moins deux types de couches de caoutchouc de bande de roulement de chape (1A, 1B) ayant des compositions de caoutchouc différentes sont agencées dans la section de bande de roulement (1) pour être adjacentes les unes aux autres dans une direction de largeur du bandage, et tanδ à 60°C de la composition de caoutchouc constituant la couche de caoutchouc de bande de roulement de chape sur un côté externe (1A) du véhicule est plus grande que tanδ à 60°C de la composition de caoutchouc constituant la couche de caoutchouc de bande de roulement de chape sur un côté interne (1B) du véhicule.

3. Bandage pneumatique selon la revendication 2, dans lequel un rapport (tanδ H/tanδ L) d'une valeur maximale tanδ H sur une valeur minimale tanδ L de la tanδ à 60°C des compositions de caoutchouc constituant l'au moins deux types de couches de caoutchouc de bande de roulement de chape (1A, 1B) se trouve dans une plage allant de 1,05 à 1,80.

4. Bandage pneumatique selon l'une quelconque des revendications 2 et 3, dans lequel une limite de l'au moins deux types de couches de caoutchouc de bande de roulement de chape (1A, 1B) est agencée en-dessous d'une rainure principale (60) s'étendant dans la direction circonférentielle du bandage dans la section de bande de roulement.

5. Bandage pneumatique selon l'une quelconque des revendications 1 à 4, ayant la direction de montage spécifiée par rapport aux parties avant et arrière du bandage au moment du montage du bandage sur le véhicule, où au moins une rainure principale (60) s'étendant dans la direction circonférentielle du bandage est prévue dans la section de bande de roulement (1), et une sculpture de la bande de roulement asymétrique est formée où un rapport de surface de rainure GAo dans une région de contact au sol sur le côté externe du véhicule par rapport à un centre de la bande de roulement (CL) est inférieur à un rapport de surface de rainure GAi dans une région de contact au sol sur le côté interne du véhicule par rapport au centre de la bande de roulement (CL).

6. Bandage pneumatique selon la revendication 5, dans lequel un rapport de surface de rainure GA dans une région de contact au sol entière se trouve dans une plage allant de 20% à 40%, et une différence (GAi-GAo) entre le rapport de surface de rainure GAo dans la région de contact au sol sur le côté externe du véhicule et le rapport de surface de rainure GAi dans la région de contact au sol sur le côté interne du véhicule se trouve dans une plage allant de 1% à 15%.
